# EUROPEAN PATENT SPECIFICATION

(11) **EP 2 418 187 B1**
(45) Date of publication and mention of the grant of the patent: **08.04.2015**
(21) Application number: 11151173.9
(22) Date of filing: 17.01.2011
(51) Int. Cl.: C04B 111/28, C04B 28/04, C04B 38/02, C04B 111/20

(54) **Dry mixture for manufacturing cellular fibro concrete and method therefor**
Trockenmischung zur Herstellung von Faserzellbeton und Verfahren dafür
Mélange sec pour la fabrication de fibrobéton cellulaire et procédé correspondant

(30) Priority: 12.08.2010 US 806423
(43) Date of publication of application: 15.02.2012
(73) Proprietor: Yastremskiy, Evgeniy Nikolaevich, St. Petersburg 195196 (RU); Emelianov, Ilia Aleksandrovich, Poselok Kovrovo 238553 (RU)
(72) Inventor: Yastremskiy, Evgeniy Nikolaevich, St. Petersburg 195196 (RU); Emelianov, Ilia Aleksandrovich, Poselok Kovrovo 238553 (RU)
(74) Representative: Sloboshanin, Sergej

(56) References cited:
- US-A- 5 494 513
- US-B1- 6 773 500
- KARAKURT C ET AL: "Utilization of natural zeolite in aerated concrete production", CEMENT AND CONCRETE COMPOSITES, ELSEVIER APPLIED SCIENCE, BARKING, GB, vol. 32, no. 1, 1 January 2010 (2010-01-01), pages 1-8, XP026770764, ISSN: 0958-9465, DOI: 10.1016/J.CEMCONCOMP.2009.10.002 [retrieved on 2009-10-13]

## Description

The invention relates to the field of construction materials and can be used for manufacturing non-autoclaved cellular fibro-concrete with natural curing/hardening.

There are known a wide variety of concrete products and methods for manufacturing concrete. For instance, US Pat. 5,775,047 teaches a 'Method and apparatus for producing lightweight concrete structure' that can be briefly described as 'A rigid lightweight cementitious structural member comprising (a) a rigid cementitious structure; and, (b) a network of asymmetrical and symmetrical pores in said structure some of which are interconnected, substantially all of said pores being of many different widths ranging from 0.20mm to 6.35mm (1/128 to 1/4 of an inch); said structural member having a density in the range of 0.080kgl⁻¹ (five pounds per cubic foot) to 0.800kgl⁻¹ (fifty pounds per cubic foot).'

Another example is U.S. Pat. 5,814,253, issued for 'Process for making a lightweight, cementitious, three dimensional structure', which describes'... a process of making a light weight, cementitious, three dimensional structure such as a building panel which includes the steps of measuring a quantity of water, measuring about 425 kilograms of cement, and between approximately 40 to 60 grams of ferric chloride in 40% solution by volume per approximately 278 liters of water, mixing the quantity of water, the cement and the ferric chloride, measuring between approximately 0.620 kilograms and 1.347 kilograms of substantially pure powdered aluminum, between approximately 0.230 kilograms and 0.710 kilograms of Hexafluorosilicate, between approximately 0.560 arid 0.680 kilograms of calcium formate, and between approximately 4 and 8 kilograms of fiber, per approximately 278 liters of water, combining the mixture of the cement, the ferric chloride and the water with the powdered aluminum, the Hexafluorosilicate, the calcium formate and the fiber, mixing the combination, waiting until the mixed combination rises, and forming the lightweight, cementitious, three dimensional structure.'

One more related art example is taught in US Pat. 6,773,500 as follows: 'Fiber reinforced aerated concrete compositions and methods of forming structural units such as blocks, panels, etc., from such compositions are disclosed. The compositions comprise a fly ash/cement slurry with a coated Al paste serving as the activator to generate the desired cellular structure. The composition can be self cured at ambient temperature and pressure without the need for ovens or autoclaves. The cured compositions can be easily cut into the desired shape by a band saw or the like.'

A recently issued US Pat 7,732,032 teaches 'Lightweight, fiber reinforced, cementitious panels possessing exceptional toughness for use as building components in applications such as roofing elements, siding elements, framing and sheathing elements, and substrate elements for installation of floor finishes in residential and other building construction types. The panels employ a continuous phase resulting from the curing of an aqueous mixture of inorganic binder, PVA fibers and lightweight filler. The inorganic binder may be, for example, hydraulic cement alone, or a combination of hydraulic cement and pozzolan/s, or a combination of hydraulic cement, alpha hemihydrate, active pozzolan and optionally lime. The PVA fibers reinforce the continuous phase and are randomly distributed throughout the composite. Typical panels of the invention have a density of 0.961-1.36 kgl⁻¹ (60-85 pcf). It further teaches that 'According to the process of the present invention, polyvinyl alcohol fibers may be added alone to the cement-like material or may be added with glass, or other synthetic or natural, fibers alone or in combination. In addition to the reinforcing fibers, adjuvants such as cellulose waste, wood chips, "fibrids" (e.g. fibrids of polypropylene) and other fillers may be added to the reinforced material.'

Yet, another recent US Pat. 7,658,794 called 'Fiber cement building materials with low density additives' discloses '... a formulation with the addition of low density additives of volcanic ash, hollow ceramic microspheres or a combination of microspheres and volcanic ash or other low density additives into cementitious cellulose fiber reinforced building materials. This formulation is advantageously lightweight or low density compared as compared to current fiber cement products without the increased moisture expansion and freeze-thaw degradation usually associated with the addition of lightweight inorganic materials to fiber cement mixes. The low density additives also give the material improved thermal dimensional stability.'

There are also known examples of cement products and methods invented in Russia, or in the former USSR. Examples of such inventions are: a raw mixture for manufacturing of cellular concrete which contains Portland cement, lime, aluminum powder, and calcium chloride (inventor's certificate of the USSR 1491857); a raw mixture for manufacturing of non-autoclaved cellular concrete with natural curing composed of cement, calcium chloride or sodium, microsilica, C-3 Super-Plastifier, gas-forming admixture and water (RU Pat. 2120926 C1); a raw mixture for manufacturing of plain non-autoclaved building blocks composed of coal ashes, cement, lime, gypsum, and aluminum powder (RU Pat. 2077520 C1); a method for production of lightweight non-autoclaved concrete manufacturing of raw mixture containing coal ashes, Portland cement and aluminum powder (USSR inventor's certificate 1477722), etc.

However, most of the mentioned related art inventions and many others require employment of autoclaves, steaming or vibration apparatuses, and other expensive equipment, and are not suitable for preparation of concrete monolith immediately on the construction site.

Therefore, a primary aim of the present invention to provide an improved dry mixture composition (formula) for cellular concrete and a method for manufacturing thereof, which method allows preparing the concrete without autoclaves, steaming or vibration apparatuses, and, if needed, immediately on the construction site. More specifically, the object of the invention is to provide for acceleration of the hardening stage of manufacturing cellular fibro-concrete under the natural atmospheric temperature limited by slurries application requirements, while providing a simultaneous improvement in physical and mechanical properties of concrete at the initial and final phases of hardening and a possibility of deploying the dry mixture of cellular fibro-concrete at a construction site by means of adding a predetermined amount of water (herein called "just-add-water") therein.

Other aims of the present invention may become apparent to those skilled in the art upon learning the instant disclosure.

According to an embodiment of the present invention, cellular fibro concrete may be prepared from a raw mixture including: Portland cement 20-75%, mineral filler 70-20%, microsilica 2-10%, super-plastifier 0.6-3% (calculated based on the mass of concrete), a modifying ceolite additive 2-10%, polypropylene fiber (0.08 - 0.15%, having a specific density preferably not exceeding 1.5 kg per 1 cubical meter), and pore former 0.002-0.65%, where the mineral filler is represented by at least one of the following: (a) fly ashes produced from combustion of coal, (b) a mixture of ashes and slag, (c) silica sand, (d) limestone, and (e) a mixture of any combination of (a), (b), (c), and (d). The raw mixture may be subjected to intermingling, activated grinding in a thin-powder grinder / mechanical activator (e.g. DESI-18 produced by "Desintegraator Tootmise", an Estonian company), and packed in bags (preferably 25 kg per bag).

The thus produced cellular fibro-concrete acquires higher strength, greater freezing-resistance, accelerated hardening, low bulk density, reduced shrinkage, the ability to be used at a construction site by means of "just-add-water", and additionally requires lower power consumption for production thereof.

While the invention may be susceptible to embodiment in different forms, there will be described in detail herein, specific embodiments of the instant invention, with the understanding that the present disclosure is to be considered an exemplification of the principles of the invention, and is not intended to limit the invention to that as illustrated and described herein.

According to a first aspect of the present invention, there is provided a raw mixture for manufacturing cellular fibro concrete, said raw mixture comprises the following components: Portland cement, microsilica, super-plastifier, polypropylene fiber, pore former, modifying ceolite additive, and a mineralogical additive represented by at least one of the following: (a) fly ashes produced from combustion of coal, (b) a mixture of ashes and slag, (c) silica sand, (d) limestone, and (e) a mixture of any combination of (a), (b), (c), and (d). According to a second aspect of the present invention, there is provided a method for processing the raw mixture according to the first aspect, said method comprising the steps of: providing said raw mixture; and subjecting said raw mixture to intermingling and activated grinding in a conventional thin-powder grinder / mechanical activator. Embodiments of the present invention may be found in the appendent dependent claims, to which reference should now be made.

The mentioned components of the mixture may be included in the following percentage ratio by weight: Portland cement 20 - 75 %; mineralogical additives 70 - 20 %; microsilica 2 -10 %; super-plastifier 0,6 - 3%; a modifying ceolite additive 2- 10 %; polypropylene fiber 0.08 - 0.15% (for fiber particles having a length not exceeding 12 millimeters and a density not exceeding 1.5 kg per 1 cubic meter); and pore former 0.002-0-65%.

Portland cement is due to comply with requirements of DIN1164 (German standard), BS 12 (UK standard), or ASTM C150 (U.S. standard) neat Portland cement and blended cement.

Requirements for the mineralogical contents of Portland cement include the following: tricalcium silicate C₃S > 50%, calcium aluminate C₃A 7 - 10 %, calcium alumoferrite C₂(A₂F) < 10%, and N₂O + K₂O < 1%. The blain surface area ranges from 3000 to 4500.

In preferred embodiments, the mineral additives are due to comply with requirements of operating standards or specifications, in particular:
Mortar sands are to comply with requirements of appropriate standard ASTM C 778 (U.S. standard), Standard Specification for Standard Sand containing SiO₂ > 75% , Fe₂O₃ < 3% CaO < 5 %, MgO < 2%, N20 +K₂O < 2 %, SO₃ < 3 % Al₂O₃ < 10 %, loss of ignition < 5% chlorides < 0.05 %, clay by volume < 3%. Almost any kinds of mortar sands are applicable for the manufacturing of dense concrete.

Fly ashes are to comply with requirements of ASTM C618 - 08a (U.S. standard) - "Standard specification for coal fly ash and raw material or calcined natural pozzolans for application in concrete", containing SiO₂ > 45%, Al₂O₃ < 10 - 30%, Fe₂O₃ < 10 %, CaO < 5 %, MgO < 2%, N₂O + K₂O < 2%, SO₃ < 3%, loss of ignition < 5 %, chlorides < 0.05% (for example, ashes obtained from firing Ekibastuz coal, Kazakhstan).

Slag of iron and those obtained from the nonferrous industry are to comply with requirements of GOST 5578-94 (Russian State Standard) - broken stone and sand from slag of iron and the nonferrous industry. The slag of iron and the nonferrous industry are glass bulk solids developed in the course of quick cooling the liquid furnace slag through submerging it into water. This is a non-metallic product, composed of silicates, calcium silicoaluminates and other compositions, which product is produced in the molten state simultaneously with iron in the blast furnace, such as slag produced on the metallurgic plant in Nizhiy Tagil (Russia).

Carbonate rocks are to comply with requirements of ASTM C 294-56 (U.S. standard). For example, dolomite of an open cut in the town of Pugachev, Saratov region (Russia) with the chemical composition of: CaO - 31.26%, MgO - 18.61%, SiO₂ - 3.8%, Fe₂ O₃ - 0.19%, SO₃ - 0.12%, Na₂O- 0.06%, K₂O - 0.24%, Al₂O₃ - 0.56%, lost of ignition - 44.19%.

Microsilica (silica fume) is to comply with requirements of JIS A 6207 (Japan), EN 13263 and ENV 205 (EU), CAN-CSA-A23, 5-M86 (Canada) is the superdispersed material composed of ball shaped particles, derived during the cleaning process of furnace gas when manufacturing siliceous alloys. The base component of material is amorphous modification dioxide. Microsilica is a waste of metallurgical production. For example, MCU 85 made by JSC "Ferroalloys of Kuznetsk " (a Russian company).

The pore former is an active pore generating additive. For instance, aluminum powder of PAP-1 or PAP-2 brands can be used (for example, produced in an aluminum plant in Volgograd, Russia). It is composed of aluminum participles in powder, having a platelet shape and coated by thin oxide and fatty film. The powder is an easily smudging product of an 'ocean-gray' color containing no scalpings seen by the naked eye. An apparent density of powder is about 0,15-0,30 grams per cubic centimeter; the content of active aluminum is 85-93%. A mean thickness of leafs is about 0,25-0,50 micrometers and an average linear dimension is 20-30 micrometers. An apparent density of powder, the content of active aluminum and the mean particle size aren't restricted, as well as their derivatives. Generally any dry pore former including a foaming agent can be used.

Exemplarily, super-plastifier can be chosen from the following: C-3 (Russia), "Mighty 100" (Japan), Sikament, Melment (Germany). These brands are additives based on sodium salts of condensation products of naphthalenesulfonic acid, and formaldehyde, as well as all current dry super- and hyper- Plastifier complying with requirments of ASTM C-494.

The modifying ceolite additive has the following spatial structure: tetrahedrons SiO2 and AlO4, joined by vertexes in laced pipes with cavities and channels, containing cathions and molecules of H2O. For example, a main composition of natural ceolites of minefield in Sokirnick (Ukraine) includes the following components by weight percentage: Si02 - 71.5; A1203 - 13.1; Fe2O3 - 0.9; MnO - 0.19; MgO - 1.07; CaO - 2.1; Na20 - 2.41; K2O - 2.96; P2O5 - 0.033; SO3 traces contained as trace contaminants: nickel, vanadium, molybdenum, copper, tin, lead, cobalt, and zink. It is multilayered and one-layered carbon nano-tubes derived by means of gas-phase chemical deposition (catalytical pyrolysis -CVD) of gas hydrocarbons with accelerating agents (Ni/Mg) under the atmosphere pressure with the following characteristics: an external diameter is 10 - 60 nanometeres, an internal diameter is 10 -20 nanometers, a length is 2 and more micrometers (for example, "Taunite" carbon multilayered nanotubes made by NanoTechCenter Ltd. (Tambov State Technical University, Russia).

The above listed requirements are referred to best modes of the present invention. In optional embodiments where the requirements deviate from the best modes, the cellular fibro concrete should still have a sufficient quality, which could be evaluated on a case-by-case basis.

In the author's opinion, the present invention derives its novelty in the fact that the modifying ceolite additive is used in the dry mixture for manufacturing the cellular fibro-concrete. Carbon nanotubes and ceolites being in the mixture, during the grinding and activation in a mechanical activator, and located on the surfaces of filler fragments (which are in a poled state), immediately effect the formation process of crystalline hydrate, at the same time producing fibrillar microstructures on the order of many-micron. A direct consequence of the process is a changing of physical and mechanical properties of cellular concrete that enhances the hardening of the concrete.

Experimental optimization of the concentration of carbon nanotubes in aquatic colloid resulted in getting a 25-50% increase of most characteristics required by concrete standards. Radically new properties of cellular fibro concrete appeared at the same time. The manufacturing of cellular concrete with an increased strength and density of 250 - 1800 kilograms per cubic meter allows getting a novel material that is considerably superior to the one determined by major construction code documents for in terms of strength, frost-resistance, reduced thermal conductivity, and water-resistance for such products.

Joint grinding and activation bring a capability of obtaining uniform mixtures (see Table 1). Substantial cost saving is achieved due to avoiding the use of autoclave, steaming, and thermal curing equipment, as well as to the possibility of using the inventive dry mixture on the construction site by means of 'just-add-water' deploying inexpensive known tools and equipment for mixing concrete mixtures on the jobsite, for example, a concrete pump Estrich Boy DC260/45.

**Table 1.**

| Components list of raw mixture and cellular fibro concrete properties | Content and components of raw mixture in percent (%) | | | | | |
|---|---|---|---|---|---|---|
| | Compositions of non-autoclaved cellular fibro concrete using modifying ceolite nano-additive | | | | | |
| | 1* | 2 | 3 | 4* | 5 | 6 |
| Portland cement CEM 1 42,5 R | 50 | 50 | 50 | 60 | 60 | 60 |
| Mineral filler | | | | | | |
| - ashes | 45 | | | 34 | | |
| - sand | | 40 | | | 30 | |
| - limestone | | | 40 | | | 30 |
| Microsilica | - | 5 | 8 | - | 5 | 8 |
| Super-plasifier C-3 | 0.4 | 0. 5 | 0.7 | 0.7 | 0.55 | 0.7 |
| Modifing ceolite nano additive | 5 | 5 | 2 | 6 | 5 | 2 |
| Polypropylene fiber, kilograms | 0.7 | 0.7 | 0.7 | 0.7 | 0.7 | 0.7 |
| Pore former | 0.2 | 0.2 | 0.2 | 0.2 | 0.2 | 0.2 |
| Water | 0.405 | 0.367 | 0.425 | 0.44 | 0.401 | 0.48 |
| Ultimate compressive strength, kg/cm² | 26.6 | 35.6 | 31.1 | 34.23 | 31.6 | 36.8 |
| Thermal conductivitv | 0.10 | 0.10 | 0.10 | 0.11 | 0.11 | 0.11 |
| Frost resistance | > F50 | > F50 | >F50 | >F50 | > F50 | >F50 |
| Density, kg/m³ | 492 | 520 | 510 | 505 | 512 | 540 |

| | | | | | | |
|---|---|---|---|---|---|---|
| * Examples 1 and 4 are comparative examples only. | | | | | | |

## Claims

1. A raw mixture for manufacturing cellular fibro concrete, said raw mixture comprises the following components: Portland cement, microsilica, super-plastifier, polypropylene fiber, pore former, modifying ceolite additive, and a mineralogical additive represented by at least one of the following: (a) fly ashes produced from combustion of coal, (b) a mixture of ashes and slag, (c) silica sand, (d) limestone, and (e) a mixture of any combination of (a), (b), (c), and (d).

2. The raw mixture according to claim 1, wherein said components are mixed in the following weight percentage ratio: Portland cement 20 - 75 %; mineralogical additive 70 - 20 %; microsilica 2 - 10 %; super-plastitier 0,6 - 3%; polypropylene fiber 0.08-0.15% ; pore former 0.002-0.65%; and modifying ceolite additive 2-10%.

3. The raw mixture according to claim 2, wherein the pore former is aluminum powder.

4. The raw mixture according to any preceding claim, wherein particles of polypropylene fiber have a length not exceeding 12 millimeters and a density not exceeding 1.5 kg per 1 cubic meter.

5. A method for processing the raw mixture according to claim 1, said method comprising the steps of:
- providing said raw mixture; and
- subjecting said raw mixture to intermingling and activated grinding in a conventional thin-powder grinder / mechanical activator.

6. The method according to claim 5, further comprising the steps of:
- packaging said raw mixture;
- bringing said raw mixture to a construction site; and
- adding a predetermined amount of water to said raw mixture, thereby obtaining said cellular fibro concrete.

## Patentansprüche

1. Rohmischung zur Herstellung von Faserzellbeton, wobei die Rohmischung die folgenden Komponenten umfasst: Portlandzement, Mikrosilica, einen Superplastifikator, Polypropylenfaser, einen Porenbildner, den Modifizierzusatz Zeolith, und einen mineralogischen Zusatzstoff, der wenigstens einem aus den Folgenden entspricht: (a) aus Kohleverbrennung erzeugte Flugaschen, (b) eine Mischung aus Aschen und Schlacke, (c) Quarzsand, (d) Kalkstein, und (e) eine Mischung aus irgendeiner Kombination von (a), (b), (c), und (d).

2. Rohmischung nach Anspruch 1, wobei die Komponenten im folgenden Gewichtsprozentverhältnis gemischt sind: Portlandzement 20 - 75 %; mineralogischer Zusatzstoff 70 - 20 %; Mikrosilica 2 - 10 %; Superplastifikator 0,6 - 3 %; Polypropylenfaser 0,08 - 0,15 %; Porenbildner 0,002 - 0,65 %; und Modifizierzusatz Zeolith 2 - 10 %.

3. Rohmischung nach Anspruch 2, wobei der Porenbildner Aluminiumpulver ist.

4. Rohmischung nach irgendeinem vorhergehenden Anspruch, wobei Partikel aus Polypropylenfaser eine Länge aufweisen, die 12 Millimeter nicht überschreitet, und eine Dichte aufweisen, die 1,5 kg pro 1 Kubikmeter nicht überschreitet.

5. Verfahren zur Verarbeitung der Rohmischung nach Anspruch 1, wobei das Verfahren die Schritte umfasst:
- Bereitstellen der Rohmischung; und
- Vermischen und aktiviertes Vermahlen der Rohmischung in einem herkömmlichen Feinpulver-Mahlwerk/mechanischen Aktivator.

6. Verfahren nach Anspruch 5, das weiterhin die Schritte aufweist:
- Verpacken der Rohmischung;
- Bringen der Rohmischung zu einer Baustelle; und
- Zufügen einer vorgegebenen Menge an Wasser zu der Rohmischung, wodurch der Faserzellbeton erhalten wird.

## Revendications

1. Mélange cru pour la fabrication de fibrobéton cellulaire, ledit mélange cru comprenant les composants suivants : du ciment Portland, de la microsilice, un superplastifiant, des fibres de polypropylène, un formateur de pores, un additif à base de zéolithe modifiée, et un additif minéralogique représenté par au moins un des éléments ci-après : (a) des cendres volantes que l'on obtient à partir de la combustion du charbon ; (b) un mélange de cendres et de laitier ; (c) du sable siliceux ; (d) du calcaire ; et (e) un mélange de l'une quelconque des combinaisons de (a), (b), (c) et (d).

2. Mélange cru selon la revendication 1, dans lequel lesdits composants sont mélangés dans les plages de pourcentages en poids ci-après : ciment Portland de 20 à 75 % ; additif minéralogique de 70 à 20 % ; microsilice de 2 à 10 % ; superplastifiant de 0,6 à 3 % ; fibres de polypropylène de 0,08 à 0,15 % ; formateur de pores de 0,002 à 0,65 % ; et additif à base de zéolithe modifiée de 2 à 10 %.

3. Mélange cru selon la revendication 2, dans lequel le formateur de pores est de la poudre d'aluminium.

4. Mélange cru selon l'une quelconque des revendications précédentes, dans lequel des particules de fibres de polypropylène possèdent une longueur qui n'est pas supérieure à 12 mm et une densité qui n'est pas supérieure à 1,5 kg/m³.

5. Procédé pour traiter le mélange cru selon la revendication 1, ledit procédé comprenant les étapes dans lesquelles :
- on procure ledit mélange cru ; et
- on soumet ledit mélange cru à un mélange et à un broyage activé dans un broyeur/activateur mécanique conventionnel pour poudre fine.

6. Procédé selon la revendication 5, comprenant en outre les étapes dans lesquelles :
- on conditionne ledit mélange cru ;
- on amène ledit mélange cru à un chantier de construction ; et
- on ajoute une quantité prédéterminée d'eau audit mélange cru pour ainsi obtenir ledit fibrobéton cellulaire.
